# EUROPÄISCHE PATENTSCHRIFT

(11) **EP 3 177 426 B1**
(45) Veröffentlichungstag und Bekanntmachung des Hinweises auf die Patenterteilung: **01.01.2020**
(21) Anmeldenummer: 15750395.4
(22) Anmeldetag: 10.08.2015
(51) Int. Cl.: B23K 26/00, B23K 26/0622, B23K 26/402

(54) **VERFAHREN ZUR HERSTELLUNG DÜNNER SUBSTRATE**
METHOD FOR PRODUCING THIN SUBSTRATES
PROCÉDÉ DE PRODUCTION DE SUBSTRATS MINCES

(30) Priorität: 08.08.2014 DE 102014011538
(43) Veröffentlichungstag der Anmeldung: 14.06.2017
(73) Patentinhaber: CeramTec-Etec GmbH, 53797 Lohmar (DE)
(72) Erfinder: SCHNETTER, Lars, 53518 Wimbach (DE); SCHUNCK, Björn, 73207 Plochingen (DE); RUDOLF, Jan, 73240 Wendlingen (DE)
(74) Vertreter: Fehrenbacher, Eckhard Anton
(86) Internationale Anmeldenummer: PCT/EP2015/068386
(87) Internationale Veröffentlichungsnummer: WO 2016/020548

(56) Entgegenhaltungen:
- EP-A1- 1 306 892
- DE-A1-102009 005 303

## Beschreibung

Die Erfindung betrifft ein Verfahren zur Herstellung dünner Substrate. Insbesondere betrifft die Erfindung ein lasergestütztes Verfahren zur Abtrennung dünner Substrate von einem Substratblock.

Die Herstellung dünner Substrate oder Scheiben aus sprödharten Werkstoffen wie Silizium, Saphir, Glas oder Keramik, beispielsweise für die Waferherstellung, kann nach dem Stand der Technik durch unterschiedliche Verfahren realisiert werden. Grob kann man unterschiedliche Herangehensweisen unterscheiden. Beispielsweise können große Einkristall-Blöcke, sog. Ingots, die durch einen Schmelz-Ziehprozess hergestellt werden, zu einzelnen dünnen Scheiben geschnitten oder gesägt werden. Ein anderes Verfahren zieht mittels aufgespannter Bänder bereits endkonturnahe Waferförmige Bänder aus einer Schmelze, die anschließend auf die gewünschte Größe zurechtgeschnitten bzw. vereinzelt werden.

Der Sägeprozess wird mit diamantbesetzten Drähten bzw. Drähten unter Zugabe einer diamanthaltigen Suspension durchgeführt. Alternativ und um den Materialverlust beim Sägen zu reduzieren, können diamantbestückte Sägeblätter, z.B. Innenlochtrennsägen verwendet werden.

Diese Sägeverfahren sind durch lange Prozesszeiten in Verbindung mit hohen Werkzeugkosten (Diamant) charakterisiert. Schnittgeschwindigkeiten von bis zu 6 mm/min. sind mit Drahtsägeprozessen für die genannten sprödharten Werkstoffe üblich. Anschließend, je nach Verwendungszweck, müssen die gesägten Substrate noch geläppt und poliert werden.

Abrasive Verfahren im Allgemeinen und die Sägeverfahren im speziellen haben den Nachteil, dass der Materialverlust im Bereich des Schnittspaltvolumens im Vergleich zur Bauteilstärke eines Wafers unverhältnismäßig hoch ist. Bei Drahtsägen ist ein Materialverlust im Sägespalt mit einer Stärke bis zu 150 µm durchaus üblich. Handelt es sich bei den gesägten Bauteilen um Wafer mit einer Bauteilstärke kleiner 200 µm ist der Materialverlust deutlich größer als 50% des eingesetzten Materials.

Polykristalline Keramiken, insbesondere Al2O3 stellen aufgrund ihrer vergleichsweise hohen thermischen, chemischen und mechanischen Belastbarkeit eine interessante Werkstoffklasse für vielerlei technische Anwendungen dar. Versuche haben jedoch gezeigt, dass die oben beschriebenen Trennverfahren zur Herstellung dünner Substrate aus einem Materialblock bei dieser Werkstoffklasse nicht optimal sind bzw. nicht funktionieren. Aluminiumoxid-Blöcke lassen sich beispielsweise nur bis zu einer Tiefe von 3 bis 5 mm mittels der Sägetechnologie schneiden. Bei größeren Eindringtiefen wird die Durchbiegung des Drahts zu groß, und der Draht reißt.

Das Verfahren des Ziehens von endkonturnahen Wafer-förmigen Bändern löst das Problem des hohen Materialverlusts bei der Produktion. Dünne Substrate werden nur quer zur Bandrichtung voneinander abgetrennt/vereinzelt, nicht aber längs über die gesamte Breite des Wafers, d.h. entlang seiner Stirnseite von einem Block geschnitten.

Nachteilig ist jedoch, dass die erzeugten dünnen Schichten im Allgemeinen polykristallin sind, d.h. es lassen sich mit diesem Verfahren z.B. keine einkristallinen Wafer herstellen. Außerdem sind die erzeugten Oberflächen meist wellig und daher nicht direkt zur Verwendung als Funktionsfläche geeignet. Zur Herstellung einer ausreichenden Oberflächengüte, Ebenheit und Konturgenauigkeit müssen noch Läpp- und Polierschritte nachgeschaltet werden. Gerade das Schleifen und Polieren der sprödharten Werkstoffe kann bei Wafern mehr als 50 % der Herstellkosten ausmachen. Durch die Herstellung einer größeren Konturgenauigkeit mit geringerer Oberflächenrauheit der geschnittenen Substrate würden sich daher erhebliche Einsparpotentiale ergeben.

Des Weiteren ist es bei der Herstellung von Substratblöcken, z.B. Ingots oder Wafer-förmigen Bändern durch Ziehen notwendig aus einer Schmelze heraus zu arbeiten. Geringe Ziehgeschwindigkeiten bedingen relativ lange Prozesszeiten. Darüber hinaus sind generell sehr hohe Prozesstemperaturen notwendig, da die Werkstoffe aufgeschmolzen werden müssen. In Summe ergeben sich dadurch hohe Prozess- und Energiekosten. In der Keramikherstellung erfolgt die Sinterung signifikant unterhalb der Schmelztemperatur, bis zu 900°C im Falle des Aluminiumoxids. Ein weiterer Nachteil ist, dass beim Ziehen von Wafer-förmigen Bändern nur eine kleine Anzahl Bauteile gleichzeitig prozessiert werden können.

Ein weiteres Verfahren zum Abtrennen von kristallinen Materialien ist aus der WO 2012/0006736 A2 bekannt. Die genannte Schrift beschreibt das Schneiden und Trennen von Bauteilen aus Wafern bzw. das Zuschneiden von Wafern. Mittels einer vorzugsweise gepulsten Laserbestrahlung wird in den Substraten eine Trennfläche aus nebeneinander liegenden Filamentstrukturen (feine Kanalstrukturen) erzeugt, die dann durch mechanische Belastung eine Abspaltung eines Teils des Substrats erlaubt.

Im Gegensatz zu üblichen Laserablationsverfahren werden die Laserstrahlen bei diesem Verfahren nicht auf die Oberfläche des Materials fokussiert, sondern erst im Inneren des Substrats zusammengeführt. Insbesondere beim gepulsten Betrieb des Lasers kommt es zu einer Filamentbildung im Substrat. Durch die Fokussierung des Lasers im Material verdampft dieses lokal und hinterlässt feine Kanalstrukturen, die, in geringem Abstand nebeneinander angeordnet, eine Trennfläche im zu trennenden Material bilden.

Da die Fokussierung der Laserstrahlen nicht auf der Oberfläche des Substrats erfolgt, sondern im Substrat, können nur Substrate verwendet werden, die für die verwendete Laserstrahlung zumindest teiltransparent sind.

Die WO 2012/0006736 A2 offenbart nicht das Abtrennen von dünnen Substraten von einem Substratblock, sondern nur das Vereinzeln von bereits dünn zugerichteten Substraten, Wafern oder Platten bzw. das Zuschneiden von übereinander gelegten dünnen Substraten beispielsweise für die Herstellung von Flüssigkristall-Displays.

Die DE 10 2009 005 303 A1 zeigt ein Verfahren zum Separieren eines dünnen und großflächigen Halbleiter-Wafers von seinem Halbleiterkristall. Dazu wird der Halbleiterkristall frontal (parallel zur Flächennormalen der Trennebene) mit einem Laserstrahl behandelt, der in einer vorgegebenen Tiefe in den Halbleiterkristall fokussiert wird und dort eine Schwachstelle erzeugt. Mittels Erzeugung einer Vielzahl von Schwachstellen entsteht eine Trennebene. Der Oberbegriff von Anspruch 1 basiert auf diesem Dokument.

Die Aufgabe der Erfindung besteht in der Bereitstellung eines Verfahrens, das das Abtrennen von dünnen Substraten, unabhängig davon ob einkristallin, polykristallin oder amorph, von einem Substratblock mit einer hohen Konturgenauigkeit erlaubt. Eine weitere Aufgabe der Erfindung besteht in der Bereitstellung eines Verfahrens zur Herstellung dünner Substrate, das wirtschaftlicher als die aus dem Stand der Technik bekannten Verfahren ist. Eine weitere Aufgabe ist die Bereitstellung eines Verfahrens, das Wafer mit einer geringen Abweichung in der Dicke erzeugen kann. Die TTV (Total Thickness Variation) des Wafers beträgt weniger als 100 µm, bevorzugt weniger als 50 µm, besonders bevorzugt weniger als 20 µm. Zeit- und Kostenintensive Polierarbeiten werden dadurch vermindert.

Die Aufgabe der Erfindung wird durch ein Verfahren zur Herstellung von dünnen Substraten durch Abtrennen von einzelnen Schichten von einem zumindest teil-transparenten Substratblock gelöst, wobei der Substratblock mittels fokussierten Laserpulsen mehrfach entlang zumindest einer gewünschten Bruchfläche zumindest partiell perforiert wird. Anschließend wird das Substrat entlang der Bruchlinie vom Substratblock abgetrennt.

Im Rahmen dieser Erfindung können die Substrate aus ein- und polykristallinen sowie amorphen Materialien bestehen oder diese umfassen. Einkristalline Materialien umfassen insbesondere Saphir-Materialien. Polykristalline Materialien umfassen insbesondere polykristalline Keramiken wie z.B. Al2O3-, Spinell- (z.b. MgAl2O4), AION-Keramiken, Keramiken aus dem System Y-Al-O wie YAG oder und andere Keramiken, die zumindest teil-transparent sind. Amorphe Materialien umfassen insbesondere Gläser.

Unter transparenten Substratblöcken werden solche verstanden, die ein Eindringen und Fokussieren des zum Erzeugen der Bruchfläche verwendeten Laserlichts bis in eine bestimmte Tiefe in das Material des Substratblocks erlauben. Transparenz ist in diesem Zusammenhang also nicht ausschließlich auf den sichtbaren Bereich des Spektrums bezogen, sondern insbesondere auf die Wellenlänge des verwendeten Laserlichts. Anders ausgedrückt bedeutet dies, dass die Substratblöcke nach dem erfindungsgemäßen Verfahren nur mit Laserlicht einer Wellenlänge geschnitten werden können, für die sie auch zumindest teil-transparent sind, weil die Transparenz die Voraussetzung für das Eindringen des Laserlichts in den Substratblock und das Fokussieren des Laserlichts im Substratblock ist.

Das Material des Substratblocks weist daher eine Transparenz von > 70 % in einem Bereich von +/- 100 nm um die Wellenlänge des verwendeten Laserlichts herum auf. Die real inline transmission (RIT) des Substratblocks sollte für die verwendete Wellenlänge des Lasers mehr als 5 % betragen.

Das erfindungsgemäße Verfahren unterscheidet sich von dem in der WO 2012/0006736 A2 beschriebenen Verfahren dahingehend, dass die zu erzeugende Bruchfläche ein gänzlich anderes Aspektverhältnis aufweist. Im Rahmen dieser Erfindung wird unter dem Aspektverhältnis das maximale Verhältnis von Länge zu Breite/Tiefe der erzeugten Bruchfläche verstanden.

Die WO 2012/0006736 A2 beschreibt die Erzeugung von Bruchflächen mit einem sehr hohen Aspektverhältnis, d.h. die zu erzeugende Bruchfläche ist vergleichsweise lang, aber nicht sehr tief. Derzeit übliche Wafer weisen jedoch Durchmesser von einem halben bis zu mehreren Zentimetern auf und sind häufig rund. Das bedeutet, dass die Bruchfläche, die zur Abtrennung eines solchen Wafers von einem Substratblock notwendig ist, vorzugsweise ein Aspektverhältnis von etwa 1 hat.

Mit Vorteil können auch rechteckige Substrate, die ein Aspektverhältnis von kleiner als 5 haben, hergestellt werden. Daraus ergibt sich ein für die Erfindung bevorzugtes Aspektverhältnis, das in einem Bereich zwischen 1 und 5 liegt, bevorzugt zwischen 1 und 2.

Bezüglich der Erzeugung der Bruchfläche ist nicht nur das Aspektverhältnis als solches wesentlich, sondern auch die Größe der zu erzeugenden Bruchfläche. Auch hier unterscheiden sich die in der WO 2012/0006736 A2 beschriebenen Trennflächen von den erfindungsgemäß vorgesehenen Bruchflächen. Die Bruchflächen, die mit dem erfindungsgemäßen Verfahren herstellbar sind, weisen eine deutlich größere Fläche auf als die in der WO 2012/0006736 A2 beschriebenen Trennflächen. Demgemäß weist eine erfindungsgemäße Bruchfläche bevorzugt eine Fläche von zumindest 4 cm2 auf.

Die Dicke des Substrats beträgt < 3mm, bevorzugt < 1mm, besonders bevorzugt < 600 µm.

Dieses Verfahren ist für das flächenhafte Abtrennen von einzelnen dünnen Substraten, z.B. Wafern, von einem Substratblock auch deshalb besonders geeignet, weil es mit zunehmender Schnitttiefe nicht zur Abweichung des Schnitts von der Normalen kommt. Dieses Abweichen von der Normalen mit zunehmender Schnitttiefe ist insbesondere bei den aus dem Stand der Technik bekannten Sägeverfahren oder auch bei Wasserstrahlschneidverfahren ein Problem, so dass größere Bauteile mit diesen Verfahren nicht endkonturnah hergestellt werden können. Aufwendige Nachbearbeitungsschritte wie Läppen sind hier üblich.

Charakteristisch für den erfindungsgemäßen Trennprozess ist, dass dieser nahezu ohne Materialverlust stattfindet. Die erzeugten Kanalstrukturen weisen nur einen Durchmesser von etwa 2 bis 3 µm auf, die einem Materialverlust von etwa 150 µm beim Drahtsägen gegenüber stehen. Die Kanäle können derzeit mit einer Länge bis 3 mm erzeugt werden, was jedoch vermutlich durchaus noch verbessert werden kann. Dies bedeutet, dass Bauteile mit einer Stärke von bis zu 4 mm mit einem Laserdurchgang geschnitten werden können.

Gemäß einer bevorzugten Ausführungsform der Erfindung weisen die parallel zueinander angeordneten Kanalstrukturen einen Abstand von 3 bis 6 µm auf. Der notwendige Abstand ist abhängig vom Bruchverhalten des zu trennenden Materials und ist für einkristallines Material anders als für polykristallines oder amorphes Material.

Da die erzeugten Kanalstrukturen vorzugsweise nur Durchmesser von 2 bis 3 µm aufweisen und eine endkonturnahe Fertigung möglich ist, kann auf ein Läppen des geschnittenen Bauteils üblicherweise verzichtet werden. Ist eine hohe Oberflächengüte, d.h. Ebenheit, des Bauteils gefordert, kann das geschnittene Substrat direkt poliert werden. Erfindungsgemäß werden also optimierte Funktionsflächen mit reduzierter Rauigkeit erzeugt, die sich anschließend besser polieren lassen. Die Rauigkeit der geschnittenen Fläche ist besser als 0,6 µm, bevorzugt sogar besser als 0,5 µm.

In der Offenlegungsschrift WO 2012/0006736 A2 werden Trennflächen erzeugt, um Bauteile zu vereinzeln. Der vorgenommene Trennprozess betrifft keine Funktionsflächen, also die Oberflächen des Bauteils, sondern nur seine Kanten. Im Gegensatz dazu können erfindungsgemäß die Bruchflächen, die durch eine großflächige Erzeugung von Filamentstrukturen erzeugt wurden, als Funktionsflächen genutzt werden.

Im Folgenden wird die Erfindung anhand von exemplarischen Figuren näher erläutert. Es zeigen:
Fig. 1: Bruchfläche in einem polykristallinen keramischen Material
Fig. 2: Schematische Darstellung von Filamentstrukturen in Draufsicht und in Seitenansicht
Fig. 3A, B: REM-Aufnahmen der Austrittsspuren von Filamentstrukturen an der Oberfläche eines polykristallinen, keramischen Substratblocks in zwei Vergrößerungen
Fig. 4A, B: REM-Aufnahmen von Filamentstrukturen in einer Bruchfläche eines polykristallinen, keramischen Substratblocks in zwei Vergrößerungen.

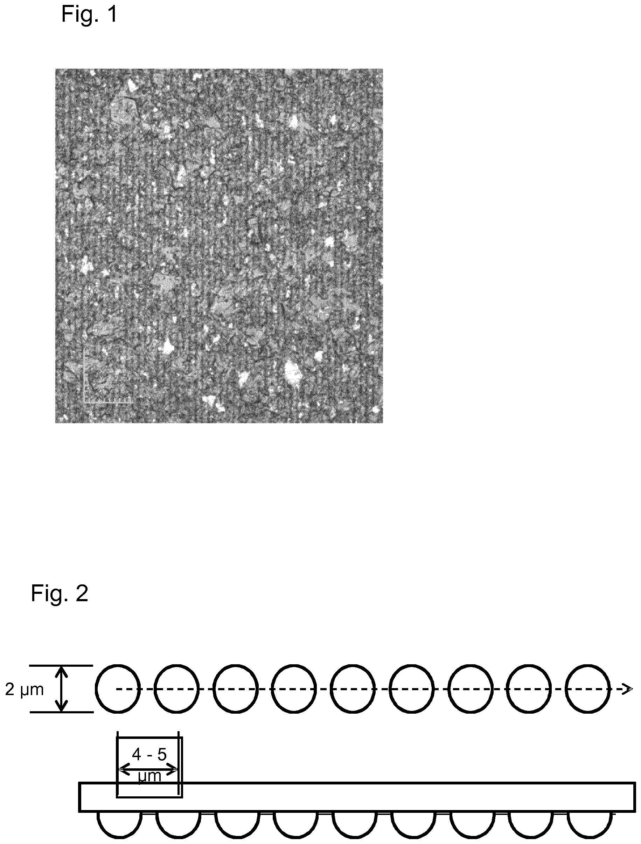

Figur 1 zeigt eine mit dem erfindungsgemäßen Verfahren hergestellte Bruchfläche in einem polykristallinen Material. Die Kanalstrukturen sind als feine Riffelung zu erkennen.

Figur 2 verdeutlicht schematisch in einer Draufsicht (Kreise) auf die Substratblockoberfläche und einer Seitenansicht (Halbkreise) einer Bruchfläche die erzeugten Filamentstrukturen. In der Draufsicht sind die Austrittsstellen der Spuren der Filamente als Lochstrukturen zu erkennen. In der Seiten- oder Kantenansicht der Bruchfläche ist erkennbar, dass die Bruchfläche durch die Spuren der Filamente verläuft und so die in Fig. 1 gezeigte Riffelstruktur auf der Bruchfläche entsteht.

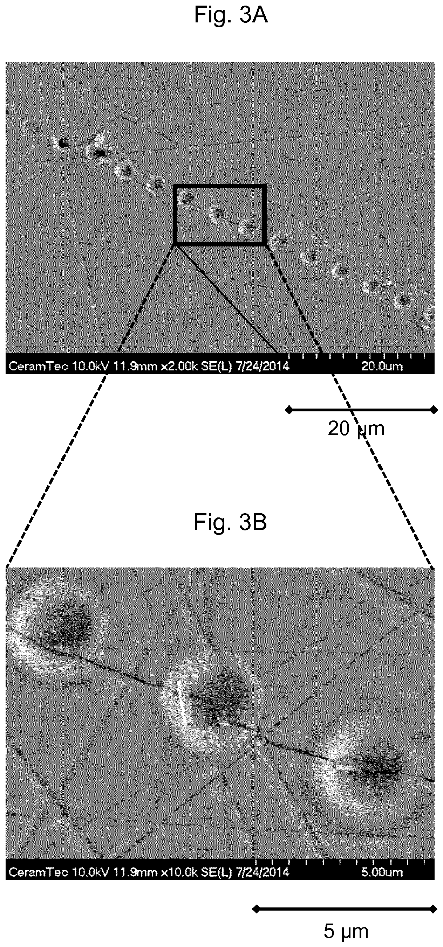

Die Figuren 3A und 3B zeigen in Rasterelektronenmikroskop-Aufnahmen (REM) die Austrittsstellen von Filamentstrukturen an der Oberfläche eines keramischen Substratblocks, wobei Fig. 3B eine Vergrößerung des ausgewählten Bereichs von Fig. 3A ist.

Grundsätzlich ist es bei diesem Verfahren auch möglich, dass die Filamentstrukturen so angeordnet werden, dass sie nicht an den Oberflächen des Substratblocks austreten. Die Filamentstrukturen finden sich dann nur im Inneren des Substratblocks, wobei vorzugsweise ein Abstand von 10 bis 50 µm Abstand zu den Oberflächen des Substratblocks besteht. Diese Ausführungsform hat den Vorteil, dass die letzten Mikrometer bis zur Substratoberfläche lediglich gebrochen werden, wodurch das Material des herzustellenden Substrats an den besonders verletzlichen Kanten unverändert bzw. unbeeinträchtigt bleibt. Dadurch lassen sich qualitativ höherwertigere Kantenbeschaffenheiten erzeugen.

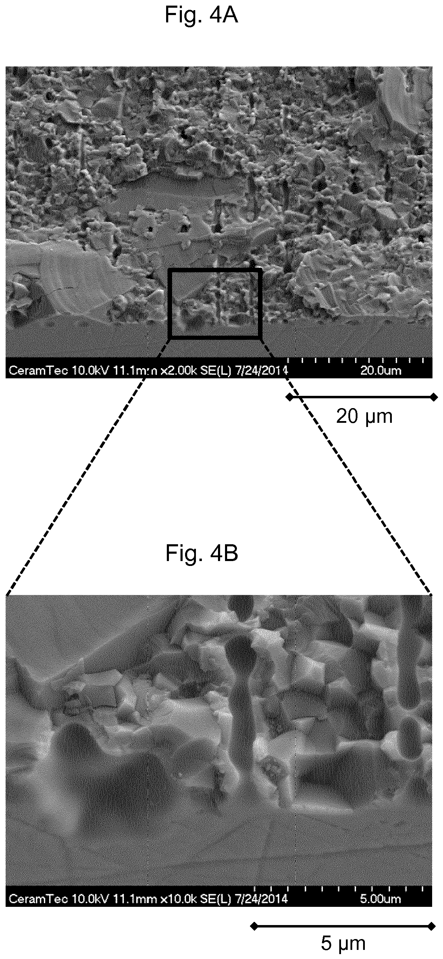

Bei den Fig. 4A und 4B handelt es sich ebenfalls um Rasterelektronenmikroskop-Aufnahmen eines keramischen Substratblocks, allerdings mit Sicht auf eine erzeugte Bruchfläche. Die vertikal verlaufenden Spuren der Filamente sind deutlich zu erkennen, insbesondere in Fig. 4B, die einen vergrößerten Ausschnitt der Bruchfläche aus Fig. 4A zeigt.

Um größere Tiefen schneiden zu können wird der Laser mehrfach über die zu erzeugende Bruchfläche geführt und in unterschiedlichen Tiefen fokussiert. Die erzeugten Kanalstrukturen können durchgängig sein oder auch durch einen nicht perforierten Absatz getrennt voneinander in übereinander liegenden Reihen, die in einer gemeinsamen Ebene angeordnet sind, vorliegen. Die gemeinsame Ebene der Perforationen bestimmt dann die spätere Bruchfläche.

Anhand von Versuchen wurde überraschend festgestellt, dass das mehrfache Perforieren an einer Stelle des Substratblocks zur Erzeugung von übereinander in einer Linie angeordneten Filamenten nur funktioniert, wenn die Schnittrichtung von unten nach oben verläuft. Ein Schneiden von oben nach unten durch ein starkes oder dickes Substrat oder einen Substratblock hindurch ist dagegen nicht möglich. Es wird vermutet, dass die durch einen ersten Laserbeschuss erzeugten Materialveränderungen in dem zu perforierenden Körper die notwendige Selbstfokussierung des Laserstrahls durch den Kerr-Effekt, eventuell aufgrund zu starker Streuung an diesen Strukturen, in darunter liegenden Bereichen unmöglich macht. Der Laser bekommt quasi keine Möglichkeit zum Einkoppeln, da das Material nicht mehr transparent ist.

Ein Schneiden von unten nach oben hat darüber hinaus den Vorteil, dass die übereinander liegenden, einzeln erzeugten Filamentstrukturen im Wesentlichen einheitlich sind, d.h. keine strukturellen oder sonstige Tendenzen, beispielsweise in die Tiefe abnehmende Perforationsvolumina, aufweisen.

Gemäß einer weiteren bevorzugten Ausführungsform der Erfindung können auch mehrere Laser, beispielsweise parallel zueinander oder in Reihen angeordnet sein. Dann können aus einem Substratblock gleichzeitig mehrere Substrate geschnitten werden, was die Wirtschaftlichkeit des Verfahrens deutlich erhöht.

Werden mehrere Laser hintereinander angeordnet, so kann das Substrat in einem Durchgang an den gleichen Stellen mehrfach, beispielsweise in unterschiedlichen Tiefen, bearbeitet werden. So können zeitsparend die oben beschriebenen übereinander liegenden Perforationsreihen in einer gemeinsamen Ebene in einem Durchgang erzeugt werden.

Gemäß einer besonders bevorzugten Ausführungsform der Erfindung sind einfache Schnittgeschwindigkeiten von 1 bis zu 250 mm/s bei einer Tiefe von 3 mm und darüber hinaus möglich. Dies steht einer Schnittgeschwindigkeit beim Sägen von bis zu 6 mm/min gegenüber. Ein ganz wesentlicher Vorteil der Erfindung liegt somit in der mehr als 2000-fachen Schnittgeschwindigkeit dieses Verfahrens im Vergleich mit herkömmlichen Sägeverfahren. Diese erhöhte Schnittgeschwindigkeit ist natürlich insbesondere bei größeren Schnittvolumina vorteilhaft.

Überraschend hat sich auch gezeigt, dass es bei diesem Verfahren, anders als bei herkömmlichen Laserablationsverfahren, nicht zu thermischen Spannungen kommt, da die Einwirkungszeit des gepulsten, vorzugsweise im Femto- oder Picosekundenbereich arbeitenden, Lasers lokal jeweils nur sehr kurz ist.

Die Verwendung des beschriebenen Verfahrens ermöglicht die Herstellung dünner Substrate mit einer Genauigkeit, die nach dem Stand der Technik bislang nicht herstellbar waren. So können Substrate mit einer TTV (Total Thickness Variation, Dickenvariation), Bow (Durchbiegung), Sory (anderer Art der Durchbiegung) mit Werten von < 10 µm trotz extrem hoher Bearbeitungsgeschwindigkeiten hergestellt werden. Eine solche Endkonturgenauigkeit ist mit Drahtsägen nicht möglich und auch mit keinem anderen, den Erfindern bekannten Verfahren. Die hohe Genauigkeit ermöglicht die Herstellung von dünnen Substraten oder Wafern mit einer Stärke von weniger als 2 mm, bevorzugt weniger als 300 µm und besonders bevorzugt von weniger als 150 µm durch Separieren von einem Substratblock.

Überraschend ist diese Genauigkeit auch dann erreichbar, wenn der Schnitt eine Tiefe von 4 mm überschreitet und daher mehrere "Reihen" von Perforationen übereinander angeordnet werden müssen, die dann eine gemeinsame Bruchfläche über die gesamte Tiefe des Schnitts ermöglichen.

Das in der WO 2012/0006736 A2 beschriebene Verfahren muss auf die besonderen Bedürfnisse des Schneidens in die Tiefe angepasst werden. Es ist eine spezielle Optik notwendig, natürlich in Abhängigkeit von der Transparenz des Substratblocks für die Wellenlänge des Lasers, die ein Eindringen und Fokussieren des Lasers bis zu 90 mm in das Substrat hinein ermöglicht. Eine Halterung für den Substratblock und ggf. das zu erzeugende dünne Substrat muss ein sicheres Positionieren erlauben, so dass die grundsätzlich mit dem Verfahren mögliche Konturgenauigkeit zum Tragen kommen kann.

Der Substrattisch und/oder die Halterung für den Substratblock und der Laserkopf müssen für das Schneiden in die Tiefe und damit das Anordnen von mehreren übereinanderliegenden Reihen von Filamentstrukturen gegeneinander, auch winklig, exakt positionierbar sein. Die übereinanderliegenden Filamentstrukturen müssen in einer Ebene liegen, damit eine glatte Bruchfläche, die im Wesentlichen frei von Kanten oder Sprüngen ist, erzeugt werden kann.

Das Verfahren kann insbesondere zur Erzeugung von Wafern genutzt werden. Die erfindungsgemäß hergestellten Wafer können folgende Eigenschaften aufweisen.

Die durch das erfindungsgemäße Verfahren hergestellten Wafer weisen eine TTV < 100 µm, besser < 50 besser µm, noch besser < 20 µm auf.

Die durch das erfindungsgemäße Verfahren hergestellten Wafer weisen einen Ra-Wert < 10 µm, besser < 1 µm, noch besser < 0,6 µm auf.

Die durch das erfindungsgemäße Verfahren hergestellten Wafer weisen eine Fläche von > 4 cm², bevorzugt > 10 cm², besonders bevorzugt > 20 cm² auf.

Zum Schneiden der erfindungsgemäßen Wafer mit den genannten Eigenschaften kann eine Sonderoptik mit einer Brennweite > 20 mm, bevorzugt > 40 mm, besonders bevorzugt > 50 mm verwendet werden. Überraschenderweise ist es durch die Verwendung einer Sonderoptik möglich größere Schnitttiefen zu erreichen, insbesondere Schnitttiefen > 10 mm.

## Patentansprüche

1. Verfahren zur Herstellung von dünnen Substraten, wobei das dünne Substrat mittels fokussierten Laserpulsen von einem Substratblock abgetrennt wird, **dadurch gekennzeichnet, dass** der Substratblock durch die Laserpulse entlang zumindest einer gewünschten Bruchfläche mehrfach zumindest partiell perforiert wird und anschließend das Substrat entlang der Bruchlinie vom Substratblock abgetrennt wird, die Laserpulse ins Innere des Substrats in unterschiedlichen Tiefen fokussiert sind, wobei die Schnittrichtung von unten nach oben verläuft, und das Substrat eine Transparenz von > 70 % in einem Bereich +/- 100 nm um die Wellenlänge des verwendeten Laserlichts herum aufweist und die real inline transmission (RIT) des Substrats für die verwendete Wellenlänge des Lasers mehr als 5 % beträgt.

2. Verfahren nach Anspruch 1, **dadurch gekennzeichnet, dass** Laserpulse im Bereich von Pikosekunden oder Femtosekunden verwendet werden.

3. Verfahren zur Herstellung von dünnen Substraten nach einem der vorhergehenden Ansprüche, **dadurch gekennzeichnet, dass** die Substrate aus ein-, polykristallinen oder amorphen Materialien bestehen.

4. Verfahren zur Herstellung von dünnen Substraten nach Anspruch 3, **dadurch gekennzeichnet, dass** das einkristalline Material Saphir ist.

5. Verfahren zur Herstellung von dünnen Substraten nach Anspruch 3, **dadurch gekennzeichnet, dass** das polykristalline Material ausgewählt ist aus der Gruppe, bestehend aus Al₂O₃-Keramiken, Spinell-Keramiken, AION-Keramiken, Keramiken aus dem System Y-Al-O oder und andere Keramiken, die zumindest teil-transparent sind.

6. Verfahren zur Herstellung von dünnen Substraten nach Anspruch 3, **dadurch gekennzeichnet, dass** das amorphe Materialien Gläser sind.

7. Verfahren zur Herstellung von dünnen Substraten nach einem der vorhergehenden Ansprüche, **dadurch gekennzeichnet, dass** die Bruchfläche ein Aspektverhältnis zwischen 1 und 5 aufweist.

8. Verfahren zur Herstellung von dünnen Substraten nach einem der vorhergehenden Ansprüche, **dadurch gekennzeichnet, dass** durch die Laserbehandlung feine Kanalstrukturen (Filamentstruktur) entstehen, wobei die Kanalstrukturen einen Durchmesser von 2 bis 3 µm aufweisen.

9. Verfahren zur Herstellung von dünnen Substraten nach Anspruch 8, **dadurch gekennzeichnet, dass** die Kanäle eine Länge von bis zu 3 mm aufweisen.

10. Verfahren zur Herstellung von dünnen Substraten nach Anspruch 8, **dadurch gekennzeichnet, dass** die parallel zueinander angeordneten Kanalstrukturen einen Abstand von 3 bis 6 µm aufweisen.

11. Verfahren zur Herstellung von dünnen Substraten nach einem der vorhergehenden Ansprüche, **dadurch gekennzeichnet, dass** die Filamentstrukturen so angeordnet sind, dass sie nicht an der Oberfläche austreten, wobei ein Abstand von 10 bis 50 µm zur Oberfläche des Substrats besteht.

12. Verfahren zur Herstellung von dünnen Substraten nach einem der vorhergehenden Ansprüche, **dadurch gekennzeichnet, dass** mehrerer in Reihe angeordnete oder parallel zueinander liegende Laser eingesetzt werden.

13. Verfahren zur Herstellung von dünnen Substraten nach einem der vorhergehenden Ansprüche, **dadurch gekennzeichnet, dass** das Substrat ein Wafer ist.

## Claims

1. Method for producing thin substrates, the thin substrate being separated from a substrate block by means of focused laser pulses, **characterized in that** the substrate block is repeatedly at least partially perforated along at least one desired fracture surface by the laser pulses, and the substrate is then separated from the substrate block along the fracture line, the laser pulses are focused into the interior of the substrate at different depths, the cutting direction extending from bottom to top, and the substrate having a transparency of > 70% in a range of +/- 100 nm around the wavelength of the laser light used, and the real inline transmission (RIT) of the substrate for the wavelength of the laser that is used being more than 5%.

2. Method according to claim 1, **characterized in that** laser pulses in the range of picoseconds or femtoseconds are used.

3. Method for producing thin substrates according to either of the preceding claims, **characterized in that** the substrates consist of monocrystalline, polycrystalline or amorphous materials.

4. Method for producing thin substrates according to claim 3, **characterized in that** the monocrystalline material is sapphire.

5. Method for producing thin substrates according to claim 3, **characterized in that** the polycrystalline material is selected from the group consisting of Al₂O₃ ceramics, spinel ceramics, AlON ceramics, ceramics from the Y-Al-O system and/or other ceramics which are at least partially transparent.

6. Method for producing thin substrates according to claim 3, **characterized in that** the amorphous materials are glasses.

7. Method for producing thin substrates according to any of the preceding claims, **characterized in that** the fracture surface has an aspect ratio of between 1 and 5.

8. Method for producing thin substrates according to any of the preceding claims, **characterized in that** fine channel structures (filament structure) are formed by the laser treatment, the channel structures having a diameter of 2 to 3 µm.

9. Method for producing thin substrates according to claim 8, **characterized in that** the channels have a length of up to 3 mm.

10. Method for producing thin substrates according to claim 8, **characterized in that** the channel structures which are arranged parallel to one another are spaced by a distance of 3 to 6 µm.

11. Method for producing thin substrates according to any of the preceding claims, **characterized in that** the filament structures are arranged such that they do not emerge at the surface, there being a distance of 10 to 50 µm to the surface of the substrate.

12. Method for producing thin substrates according to any of the preceding claims, **characterized in that** a plurality of lasers arranged in series or parallel to one another are used.

13. Method for producing thin substrates according to any of the preceding claims, **characterized in that** the substrate is a wafer.

## Revendications

1. Procédé de production de substrats minces, dans lequel le substrat mince est séparé d'un bloc de substrats au moyen d'impulsions laser focalisées, **caractérisé en ce que** le bloc de substrats est perforé à plusieurs reprises au moins partiellement par les impulsions laser le long d'au moins une surface de fracture souhaitée, puis **en ce que** le substrat est séparé du bloc de substrats le long de la ligne de fracture, **en ce que** les impulsions laser sont focalisées à l'intérieur du substrat à différentes profondeurs, le sens de la coupe allant du bas vers le haut, et le substrat présentant une transparence de > 70 % dans une plage de +/-100 nm autour de la longueur d'onde de la lumière laser utilisée et la transmission en ligne réelle (RIT) du substrat pour la longueur d'onde laser utilisée étant supérieure à 5 %.

2. Procédé selon la revendication 1, **caractérisé en ce que** des impulsions laser dans la plage de picosecondes ou de femtosecondes sont utilisées.

3. Procédé de production de substrats minces selon l'une des revendications précédentes, **caractérisé en ce que** les substrats constitués de matériaux monocristallins, polycristallins ou amorphes.

4. Procédé de production de substrats minces selon la revendication 3, **caractérisé en ce que** le matériau monocristallin est du saphir.

5. Procédé de production de substrats minces selon la revendication 3, **caractérisé en ce que** le matériau polycristallin est choisi dans le groupe constitué des céramiques Al₂O₃, des céramiques de spinelle, des céramiques AlON, des céramiques du système Y-Al-O ou et/ou d'autres céramiques au moins partiellement transparentes.

6. Procédé de production de substrats minces selon la revendication 3, **caractérisé en ce que** les matériaux amorphes sont des verres.

7. Procédé de production de substrats minces selon l'une des revendications précédentes, **caractérisé en ce que** la surface de fracture présente un rapport d'aspect compris entre 1 et 5.

8. Procédé de production de substrats minces selon l'une des revendications précédentes, **caractérisé en ce que** des structures de canaux fines (structure filamentaire) sont réalisées par traitement laser, les structures de canaux ayant un diamètre de 2 à 3 µm.

9. Procédé de production de substrats minces selon la revendication 8, **caractérisé en ce que** les canaux ont une longueur allant jusqu'à 3 mm.

10. Procédé de production de substrats minces selon la revendication 8, **caractérisé en ce que** les structures de canaux disposées parallèlement les unes aux autres présentent un espacement de 3 à 6 µm.

11. Procédé de production de substrats minces selon l'une des revendications précédentes, **caractérisé en ce que** les structures filamentaires sont disposées de telle manière qu'elles ne sortent pas au niveau de la surface, un espacement de 10 à 50 µm par rapport à la surface du substrat étant prévu.

12. Procédé de production de substrats minces selon l'une des revendications précédentes, **caractérisé en ce que** plusieurs lasers disposés en série ou parallèlement les uns aux autres sont utilisés.

13. Procédé de production de substrats minces selon l'une des revendications précédentes, **caractérisé en ce que** le substrat est une pastille.
